# EUROPÄISCHE PATENTSCHRIFT

(11) **EP 3 487 032 B1**
(45) Veröffentlichungstag und Bekanntmachung des Hinweises auf die Patenterteilung: **09.06.2021**
(21) Anmeldenummer: 18200306.1
(22) Anmeldetag: 15.10.2018
(51) Int. Cl.: H02J 7/00, B60L 53/14, B60L 53/30, B60L 53/60, B60L 53/64

(54) **VERFAHREN UND LADESÄULE ZUM AUFLADEN MEHRERER ELEKTROFAHRZEUGE**
METHOD AND CHARGING COLUMN TO CHARGE MULTIPLE ELECTRIC VEHICLES
MÉTHODE ET STATION DE RECHARGE POUR CHARGER PLUSIEURS VÉHICULES ÉLECTRIQUES

(30) Priorität: 20.11.2017 DE 102017220695
(43) Veröffentlichungstag der Anmeldung: 22.05.2019
(73) Patentinhaber: AUDI AG, 85045 Ingolstadt (DE)
(72) Erfinder: Färber, Ingo, 85051 Ingolstadt (DE)

(56) Entgegenhaltungen:
- WO-A1-2017/096216
- WO-A2-2012/088223
- US-A1- 2016 193 932

## Beschreibung

Die Erfindung betrifft ein Verfahren und eine Ladesäule zum Aufladen mehrerer Elektrofahrzeuge der in den Oberbegriffen der unabhängigen Patentansprüche angegebenen Art.

Üblicherweise sind Ladesäulen ausschließlich für die Beladung von Elektrofahrzeugen konzipiert. Ladesäulen bedienen in der Regel einen bestimmten Parkplatz. Dort kann ein Fahrzeug zum Aufladen seiner Batterien abgestellt werden, wobei in dem Fall die betreffende Ladestation für die Dauer des Ladevorgangs nicht für andere Fahrzeuge zur Verfügung steht. Ebenso wenig ist allerdings die Ladestation üblicherweise nach dem Ladevorgang nutzbar, da die Ladesäule für die gesamte Dauer eines Parkvorgangs des betreffenden Fahrzeugs, auch wenn es schon fertig geladen ist, blockiert ist.

Die US 2010/0217485 A1 beschreibt eine Steuervorrichtung zum Aufladen mehrerer Fahrzeuge. Dabei ist es unter anderem vorgesehen, dass eine Priorität für die einzelnen aufzuladenden Fahrzeuge festgelegt werden kann, wobei die Fahrzeuge entsprechend der vorgegebenen Priorität aufgeladen werden.

Die DE 10 2010 040 395 A1 zeigt ein Verfahren zum Aufladen von Fahrzeugbatterien. Es wird eine Sammelladestation mit mehreren einzelnen Ladesäulen und daran angeschlossenen Fahrzeugen gezeigt, wobei die Sammelladestation eine Reihenfolge zum Aufladen der einzelnen Fahrzeuge bestimmt.

Die DE 10 2011 008 764 A1 zeigt ein Verfahren zum Aufladen mehrerer Fahrzeuge. Dabei ist es vorgesehen, eine zur Verfügung stehende Maximale Anschlussleistung auf mehrere mit einer Ladestation verbundene Fahrzeuge gemäß einer Fahrzeugpriorisierung zu verteilen.

Die US 2016/0193932 A1 und die WO 2012/088223 A2 zeigen jeweils eine Ladeeinrichtung für Elektrofahrzeuge, mit der gleichzeitig mehrere Elektrofahrzeuge verbunden sein können, wobei ein automatisches Laden der mehreren Elektrofahrzeuge aufeinander folgend erfolgt.

Die WO 2017/096216 A1 zeigt eine Ladeeinrichtung für Elektrofahrzeuge, mit der gleichzeitig mehrere Elektrofahrzeuge verbunden sein können, wobei die einzelnen Elektrofahrzeuge jeweils abwechselnd für jeweils eine vorgegebene Zeitdauer geladen werden.

Es ist die Aufgabe der vorliegenden Erfindung, eine Lösung bereitzustellen, mittels welcher Ladesäulen zum Aufladen von Elektrofahrzeugen besonders effizient genutzt werden können.

Diese Aufgabe wird durch ein Verfahren zum Betreiben einer Ladesäule sowie durch eine Ladesäule mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben einer Ladesäule werden mehrere gleichzeitig an jeweiligen Anschlüssen der Ladesäule angeschlossene Elektrofahrzeuge mittels einer Ladesteuerung der Ladesäule geladen. Dabei ist es erfindungsgemäß vorgesehen, dass die Ladesteuerung die gleichzeitig angeschlossenen Elektrofahrzeuge ausschließlich einzeln lädt.

Unter der Ladesäule ist eine Lademöglichkeit für Elektrofahrzeuge zu verstehen, welche oftmals auch als Ladestation bezeichnet wird. Derartige Ladesäulen beziehungsweise Ladestationen werden auch oftmals als Stromtankstelle oder auch als Ladepunkte bezeichnet. Bei der Ladesäule kann es sich sowohl um eine öffentliche als auch um eine nicht-öffentlich zugängliche Ladesäule handeln, wobei es sich bei den jeweiligen Anschlüssen der Ladesäule beispielsweise im einfachsten Fall um Steckdosen, Ladekabel oder auch um andere Schnittstellen handeln kann, über welche daran angeschlossene Elektrofahrzeuge mit Strom versorgt werden können.

Der Erfindung liegt die Erkenntnis zugrunde, das üblicherweise Ladesäulen an Parkplätzen nur mit einem Fahrzeug verbunden werden können, wobei die betreffende Ladesäule während der gesamten Parkdauer eines Fahrzeugs belegt ist. Dadurch entsteht häufig eine große Differenz zwischen einer Verweildauer eines betreffenden Fahrzeugs an der Ladesäule und einer eigentlichen Nutzungsdauer der Ladesäule, also einer eigentlichen Dauer eines Ladevorgangs. Wird die Ladesäule durch fertig geladene Fahrzeuge blockiert, sinkt die Auslastung für einen Betreiber der Ladesäule und die Ladesäule steht gleichzeitig nicht für weitere Abnehmer zur Verfügung.

Bei dem erfindungsgemäßen Verfahren hingegen ist es möglich, mehrere Elektrofahrzeuge gleichzeitig an jeweiligen Anschlüssen der Ladesäule anzuschließen, wobei alle Elektrofahrzeuge an der Ladesäule geladen werden können, wobei dies erfindungsgemäß dadurch erfolgt, dass die Ladesteuerung die gleichzeitig angeschlossenen Elektrofahrzeuge ausschließlich einzeln auflädt. Die Ladesäule kann also mit mehreren Elektrofahrzeugen verbunden werden und bedient somit auch mehrere Parkplätze. Die Ladesteuerung bestimmt die Reihenfolge, in der die Elektrofahrzeuge geladen werden.

Dadurch, dass die Ladesteuerung die gleichzeitig angeschlossenen Elektrofahrzeuge ausschließlich einzeln lädt, ergibt sich ein besonders einfaches Ladekonzept beim Betreiben der Ladesäule. Durch das erfindungsgemäße Verfahren wird Nutzern von Elektrofahrzeugen ein besonders großes Angebot an verfügbaren Ladepunkten bereitgestellt, denn Benutzer können auch bereits belegte Ladesäulen anfahren und ihr Fahrzeug beispielsweise nachranging aufladen lassen. Ein zusätzlicher Zeitaufwand für die Suche nach freien Ladesäulen kann somit entfallen, insbesondere kann ein damit auch eventuell ansonsten verbundener weiterer Anfahrweg entfallen. Zudem entsteht durch das erfindungsgemäße Verfahren ein besonders hoher Auslastungsgrad bei Ladesäulen, sodass Betreiber von Ladesäulen diese besonders effizient betreiben können. Aus Betreibersicht ist ein Nutzungsgrad der Ladesäule optimal, wenn die abgegebene Lademenge pro Zeiteinheit möglichst hoch ist. Diesem Aspekt trägt das erfindungsgemäße Verfahren Rechnung.

Erfindungsgemäß ist es zudem vorgesehen, dass die Ladesteuerung ein an einem Anschluss, der als nachrangig zu bedienender Anschluss ausgebildet und durch eine entsprechende Beschriftung und/oder eine entsprechende Farbgebung als nachrangig zu bedienender Anschluss optisch hervorgehoben ist, angeschlossenes Elektrofahrzeug mit niedrigerer Priorität als die an den übrigen Anschlüssen angeschlossenen Elektrofahrzeuge auflädt. Wird ein Elektrofahrzeug an dem nachrangig zu bedienenden Anschluss angeschlossen, so werden zunächst die anderen Fahrzeuge, welche an den übrigen Anschlüssen angeschlossen worden sind, zuerst und mit höherer Priorität aufgeladen. Sollten diese einen bestimmten Ladezustand erreicht haben oder auch vollständig aufgeladen worden sein, so wird dann erst das Elektrofahrzeug aufgeladen, welches an den nachrangig zu bedienenden Anschluss angeschlossen worden ist.

Eine vorteilhafte Ausführungsform der Erfindung sieht vor, dass eine Reihenfolge, gemäß welcher die gleichzeitig angeschlossenen Elektrofahrzeuge ausschließlich einzeln geladen werden, gemäß einer erfassten Vorgabe eines Betreibers der Ladesäule erfolgt. So kann ein Betreiber der Ladesäule auf einfache und auch beliebige Weise vorgeben, wie die Reihenfolge genau aussehen soll, gemäß welcher die an der Ladesäule angeschlossenen Elektrofahrzeuge aufgeladen werden sollen.

Eine weitere vorteilhafte Ausführungsform der Erfindung sieht vor, dass die Vorgabe des Betreibers der Ladesäule mittels einer Benutzerschnittstelle der Ladesäule erfasst oder mittels einer Kommunikationsschnittstelle der Ladesäule empfangen wird. Beispielsweise ist es möglich, dass an einer Ladesäule ein Touchpad oder auch eine andere Eingabevorrichtung vorgesehen ist, über welche der Betreiber der Ladesäule auf einfache Weise die von ihm präferierte Reihenfolge festlegen kann. Zum Beispiel kann er festlegen, dass die zuerst angeschlossenen Fahrzeuge auch zuerst geladen werden. Oder er kann beispielsweise eine Priorisierung nach Stromtarif festlegen oder anderweitige Vorgaben tätigen. Alternativ oder zusätzlich ist es auch möglich, dass die Ladesäule die besagte Kommunikationsschnittstelle aufweist, um eine vom Benutzer festgelegte Reihenfolge beispielsweise per WLAN oder auch über ein Mobilfunknetz zu empfangen. In dem Fall wäre es beispielsweise möglich, dass der Betreiber der Ladesäule über ein entsprechend geeignetes Programm an seinem Smartphone die Reihenfolge festlegen kann. Andere Vorgehensweisen sind natürlich ebenfalls denkbar, bei welchen der Betreiber der Ladesäule die von ihm präferierte Reihenfolge vorgibt und diese dann an die Kommunikationsschnittstelle der Ladesäule überträgt.

In weiterer vorteilhafter Ausgestaltung der Erfindung ist es vorgesehen, dass die Elektrofahrzeuge gemäß einer Reihenfolge, wie sie an der Ladesäule angeschlossen worden sind, nacheinander bis auf einen vorgegebenen Ladezustand aufgeladen werden. Dies könnte beispielsweise folgendermaßen aussehen: das Elektrofahrzeug, welches zuerst angeschlossen worden ist, wird zunächst zu 80 Prozent aufgeladen. Die anderen Fahrzeuge, die danach angeschlossen worden sind, werden so lange nicht aufgeladen. Danach wird das Fahrzeug, welches als zweites angeschlossen worden ist, aufgeladen, wieder beispielsweise bis auf 80 Prozent. So geht es weiter, bis beispielsweise ein drittes und viertes Fahrzeug ebenfalls zu 80 Prozent aufgeladen worden sind. Verlässt zwischenzeitlich eines der Fahrzeuge die Ladesäule und kommt ein neues hinzu, wird dieses wiederum zu 80 Prozent aufgeladen. Wurden alle Fahrzeuge bis auf 80 Prozent aufgeladen, so werden die Fahrzeuge dann nacheinander beispielsweise bis auf 100 Prozent aufgeladen. Dadurch ergibt sich ebenfalls ein besonders einfaches Konzept bezüglich der Reihenfolge, wie die Elektrofahrzeuge aufgeladen werden sollen. Beispielsweise müssen nicht aufwändig Ladeströme oder andere Kenngrößen oder physikalische Größen gemessen und ausgewertet werden, was den Ladevorgang der Vielzahl von Elektrofahrzeugen an ein und derselben Ladesäule erheblich erleichtern kann.

Gemäß einer weiteren vorteilhaften Ausführungsform der Erfindung ist es vorgesehen, dass für alle Elektrofahrzeuge derselbe Wert für den Ladezustand vorgegeben wird. Unter dem Ladezustand ist der Sollladezustand zu verstehen. Dadurch ergibt sich nochmals eine erhebliche Vereinfachung des Konzepts im Hinblick auf die Vorgabe der Reihenfolge und der Ausführung der Ladevorgänge der einzelnen Elektrofahrzeuge.

Eine weitere vorteilhafte Ausführungsform der Erfindung sieht vor, dass nachdem bei allen Elektrofahrzeugen der vorgegebene Ladezustand erreicht worden ist, die Elektrofahrzeuge nacheinander vollständig aufgeladen werden. Sobald also alle Elektrofahrzeuge den vorgegebenen Ladezustand erreicht haben, können diese - vorausgesetzt, dass diese lang genug an der Ladesäule angeschlossen bleiben - auch vollständig aufgeladen werden.

Eine weitere vorteilhafte Ausführungsform der Erfindung sieht vor, dass nach dem Anschließen der jeweiligen Elektrofahrzeuge überprüft wird, ob diese jeweils einen erhöhten Prioritätsstatus aufweisen, wobei diejenigen Elektrofahrzeuge mit erhöhtem Prioritätsstatus zuerst geladen werden. Beispielsweise ist es möglich, dass jeweilige Nutzer der Elektrofahrzeuge einen bestimmten Stromtarif beim Betreiber der Ladesäule gewählt haben, welcher einen besonders hohen Prioritätsstatus aufweist oder einen besonders niedrigen Prioritätsstatus aufweist. Im ersteren Fall kann es erforderlich sein, dass der Benutzer etwas mehr Geld für einen Tarif bezahlen muss, wobei er im letzteren Fall etwas weniger bezahlen muss. So können jeweilige Benutzer der Elektrofahrzeuge selbst auswählen, in welchem Tarif sie sich einstufen wollen, um dadurch zu bestimmen, ob sie vorranging oder nachrangig an der Ladestation aufgeladen werden. Dadurch ergibt sich ebenfalls eine besonders einfache Vorgabe der Reihenfolge für die jeweils an der Ladesäule angeschlossenen Elektrofahrzeuge hinsichtlich ihrer einzelnen Ladevorgänge.

Die erfindungsgemäße Ladesäule umfasst mehrere Anschlüsse zum gleichzeitigen Anschließen mehrerer Elektrofahrzeuge und eine Ladesteuerung, welche dazu eingerichtet ist, die gleichzeitig an den jeweiligen Anschlüssen angeschlossenen Elektrofahrzeuge zu laden, wobei sich die erfindungsgemäße Ladesäule dadurch auszeichnet, dass die Ladesteuerung dazu eingerichtet ist, die gleichzeitig angeschlossenen Elektrofahrzeuge ausschließlich einzeln zu laden. Vorteilhafte Ausgestaltungen des erfindungsgemäßen Verfahrens sind als vorteilhafte Ausgestaltungen der erfindungsgemäßen Ladesäule und umgekehrt anzusehen, wobei die Ladesäule insbesondere Mittel zur Durchführung des erfindungsgemäßen Verfahrensschritte aufweist.

Es ist vorgesehen, dass zumindest einer der Anschlüsse als nachrangig zu bedienender Anschluss ausgebildet ist, wobei die Ladesteuerung dazu eingerichtet ist, ein an diesem Anschluss angeschlossenes Elektrofahrzeug mit niedrigerer Priorität als die an den übrigen Anschlüssen angeschlossenen Elektrofahrzeuge aufzuladen. Der besagte Anschluss ist entsprechend gekennzeichnet, sodass er auf einfache Weise als nachrangig zu bedienender Anschluss optisch hervorgehoben ist. Dies erfolgt durch eine entsprechende Beschriftung und/oder auch eine entsprechende Farbgebung. Wird ein Elektrofahrzeug an dem nachrangig zu bedienenden Anschluss angeschlossen, so werden zunächst die anderen Fahrzeuge, welche an den übrigen Anschlüssen angeschlossen worden sind, zuerst und mit höherer Priorität aufgeladen. Sollten diese einen bestimmten Ladezustand erreicht haben oder auch vollständig aufgeladen worden sein, so wird dann erst das Elektrofahrzeug aufgeladen, welches an den nachrangig zu bedienenden Anschluss angeschlossen worden ist. In dem Zusammenhang kann es beispielsweise vorgesehen sei, dass der Ladevorgang an dem nachrangig zu bedienenden Anschluss verbilligt ist, sodass Benutzer die Möglichkeit haben, gegen ein geringeres Entgelt ihre Elektrofahrzeuge aufladen zu lassen. Dies kann beispielsweise dann Sinn machen, wenn ein Benutzer des Elektrofahrzeugs weiß, dass er sein Fahrzeug den ganzen Tag an der Ladesäule angeschlossen stehen lassen möchte, beispielsweise weil er sein Fahrzeug in seiner Arbeitsstätte an der besagten Ladesäule geparkt hat. In dem Fall könnte die Wahrscheinlichkeit relativ hoch sein, dass sein Elektrofahrzeug allein aufgrund der langen Verweildauer an der Ladesäule dennoch vollständig aufgeladen wird, selbst wenn er das Elektrofahrzeug an dem nachrangig zu bedienenden Anschluss angeschlossen hat.

Eine vorteilhafte Ausführungsform der erfindungsgemäßen Ladesäule sieht vor, dass die Anschlüsse und die Ladesteuerung in einem nachrüstbaren Erweiterungsmodul zusammengefasst sind. Dadurch können herkömmliche Ladesäulen auf einfache Weise durch Einbau des Erweiterungsmoduls nachgerüstet und somit aufgerüstet werden, sodass eine Ladesäule, an welcher ursprünglich nur ein einziges Fahrzeug angeschlossen und aufgeladen werden konnte, nach Hinzufügung des Erweiterungsmoduls dazu eingerichtet ist, mehrere Elektrofahrzeuge zu bedienen. Es ist aber genauso gut auch möglich, dass die Anschlüsse und die Ladesteuerung von vornerein in die Ladesäule integriert sind, also schon bei deren Herstellung eingebaut werden.

Gemäß einer weiteren vorteilhaften Ausführungsform der Ladesäule ist es vorgesehen, dass die Ladesäule eine Benutzerschnittstelle aufweist, an welcher ein Benutzer auswählen kann, dass sein Elektrofahrzeug nachrangig und/oder mit einem vergünstigen Tarif geladen werden soll, wobei die Ladesteuerung dazu eingerichtet ist, dieses Elektrofahrzeug mit niedrigerer Priorität als die an den übrigen Anschlüssen angeschlossenen Elektrofahrzeuge aufzuladen. In dem Fall hat ein Benutzer also die Möglichkeit, über die Benutzerschnittstelle der Ladesäule vorzugeben, ob sein Elektrofahrzeug mit niedriger Priorität und/oder zu einem vergünstigten Tarif aufgeladen werden soll. Dadurch kann der betreffende Benutzer des Elektrofahrzeugs auf einfache Weise die Reihenfolge des Ladevorgangs mitbestimmen und dadurch gegebenenfalls auch Geld sparen.

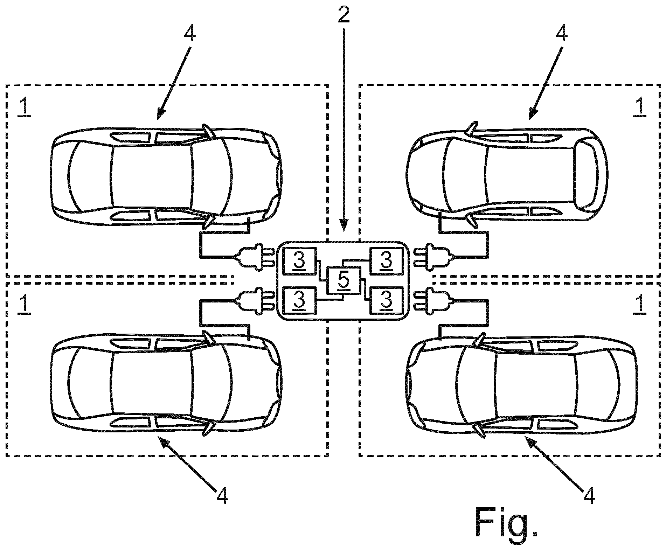

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung einer Ladesäule, welche von vier Parkplätzen umgeben ist, an welchen jeweilige Elektrofahrzeuge abgestellt und an der Ladesäule angeschlossen worden sind.

Vier Parkplätze 1, welche eine Ladesäule 2 umgeben, sind in der einzigen Figur schematisch dargestellt. Die Ladesäule 2 umfasst vier Anschlüsse 3, an welchen jeweilige Elektrofahrzeuge 4, die auf den jeweiligen Parkplätzen 1 geparkt sind, angeschlossen sind. Die Ladesäule 2 umfasst des Weiteren eine Ladesteuerung 5, welche dazu eingerichtet ist, die einzelnen Anschlüsse 3 zum Aufladen der jeweiligen Elektrofahrzeuge 1 anzusteuern.

Dadurch, dass die Ladesäule 2 vier der Anschlüsse 3 aufweist, kann die Ladesäule 2 die vier Parkplätze 1 und die darauf abgestellten Elektrofahrzeuge 4 gleichermaßen bedienen, also die Elektrofahrzeuge 4 aufladen. Die Ladesteuerung 5 lädt die gleichzeitig angeschlossenen Elektrofahrzeuge 4 dabei ausschließlich einzeln auf. Dabei ist es beispielsweise möglich, dass ein Betreiber der Ladesäule 2 selbst eine Reihenfolge vorgeben kann, gemäß welcher die gleichzeitig angeschlossenen Elektrofahrzeuge 4 ausschließlich einzeln geladen werden.

Dafür kann an der Ladesäule 2 beispielsweise eine hier nicht näher dargestellte Benutzerschnittstelle, zum Beispiel in Form eines Touchpads, eines Touchscreens oder dergleichen, vorgesehen sein. Über die Benutzerschnittstelle kann der Betreiber der Ladesäule 2 auf einfache Weise die von ihm präferierte Reihenfolge festlegen, gemäß welcher die jeweiligen Elektrofahrzeuge 4 aufgeladen werden sollen, sofern sie an der Ladesäule 2 angeschlossen worden sind.

Alternativ oder zusätzlich ist es auch möglich, dass eine hier nicht näher dargestellte Kommunikationsschnittstelle der Ladesäule 2 eine jeweilige Vorgabe des Betreibers der Ladesäule 2 im Hinblick auf eine von ihm präferierte Reihenfolge empfängt. So kann der Betreiber der Ladesäule 2 beispielsweise über einen entsprechende App auf seinem Smartphone die von ihm präferierte Reihenfolge vorgeben. Genauso gut ist es auch denkbar, dass der Betreiber beispielsweise browserbasiert oder über ein entsprechendes Programm an seinem PC die Reihenfolge vorgibt, wobei diesbezügliche Informationen und Daten dann an die Kommunikationsschnittstelle der Ladesäule 2 übertragen werden.

Ferner ist es auch möglich, dass die Elektrofahrzeuge 4 einfach gemäß einer Reihenfolge, wie sie nacheinander an der Ladesäule 2 angeschlossen worden sind, auch nacheinander bis auf einen vorgegebenen Ladezustand aufgeladen werden. Beispielsweise ist es möglich, dass Elektrofahrzeuge 4 gemäß ihrer Anschlussreihenfolge an der Ladesäule 2 zunächst einzeln nacheinander bis auf 80 Prozent aufgeladen werden, ihre jeweiligen Traktionsbatterien also bis auf SOP 80 Prozent aufgeladen werden. Nachdem sämtliche Batterien der Elektrofahrzeuge 4 bis auf 80 Prozent SOP aufgeladen worden sind, werden diese dann beispielsweise nacheinander vollständig aufgeladen, solange die Elektrofahrzeuge 4 lange genug an der Ladesäule 2 angeschlossen bleiben.

Zudem ist es auch möglich, dass nach dem Anschließen der jeweiligen Elektrofahrzeuge 4 überprüft wird, ob diese jeweils einen erhöhten Prioritätsstatus aufweisen, wobei diejenigen Elektrofahrzeuge 4 mit einem erhöhten Prioritätsstatus zuerst geladen werden. So ist es beispielsweise denkbar, dass jeweilige Benutzer der Elektrofahrzeuge 4 unterschiedliche Tarife beim Betreiber der Ladesäule 2 abschließen können, von einem besonders günstigen bis hin zu einem besonders teuren Tarif. Im ersteren Fall ist es beispielsweise denkbar, dass diesen Benutzern und somit ihren Elektrofahrzeugen 4 eine besonders niedrige Priorität beziehungsweise ein besonders niedriger Prioritätsstatus hinsichtlich eines Ladevorgangs an der Ladesäule 2 zugewiesen wird. In dem Fall, dass die Benutzer der jeweiligen Elektrofahrzeuge 4 einen besonders teuren Tarif gewählt haben, so ist es denkbar, dass in dem Fall die betreffenden Elektrofahrzeuge 4 mit einem besonders hohen Prioritätsstatus versehen und priorisiert und idealer Weise sogar als allererstes geladen werden.

Auch ist es möglich, dass zumindest einer der Anschlüsse 3 als nachrangig zu bedienender Anschluss ausgebildet und auch entsprechend optisch gekennzeichnet ist. Die Ladesteuerung 5 ist in dem Fall dazu eingerichtet, ein an diesem Anschluss 3 angeschlossenes Elektrofahrzeug 4 mit niedrigerer Priorität als die an den übrigen Anschlüssen 3 angeschlossenen Elektrofahrzeuge 4 zu laden. So sieht ein Benutzer von einem der Elektrofahrzeuge 4 auf einfach Weise, an welchem der Anschlüsse 3 er sein Elektrofahrzeug 4 anschließen muss, wenn es ihm ausreicht, dass sein Elektrofahrzeug 4 mit einer niedrigeren Priorität als an den anderen Anschlüssen 3, also nachrangig, aufgeladen wird. Dies kann beispielsweise dann der Fall sein, wenn der Benutzer des betreffenden Elektrofahrzeugs 4 weiß, dass er sein Elektrofahrzeug 4 den gesamten Tag an der Ladesäule 2 angeschlossen lassen kann. Im Zusammenhang mit der niedrigeren Priorisierung seines Elektrofahrzeugs 4 beim Laden an der Ladesäule 2 kann es auch vorgesehen sein, dass er dann weniger Geld für den Ladevorgang bezahlen muss.

Schließlich ist es auch möglich, dass die Ladesäule 2 eine hier nicht näher dargestellte Benutzerschnittstelle aufweist, an welcher ein Benutzer auswählen kann, dass sein Elektrofahrzeug 4 nachrangig und/oder mit einem vergünstigten Tarif geladen werden soll. In dem Fall ist die Ladesteuerung 5 dazu eingerichtet, dieses Elektrofahrzeug 4 mit niedrigerer Priorität als die an den übrigen Anschlüssen angeschlossenen Elektrofahrzeuge 4 aufzuladen. In diesem Fall ist es also variabel möglich, den jeweiligen Anschlüssen 3 eine niedrigere Priorität einzuräumen, indem ein Benutzer eines betreffenden Elektrofahrzeugs 4 einfach über die besagte Benutzerschnittstelle vorgibt, ob sein Elektrofahrzeug 4 mit niedrigerer Priorität, also nachrangig, und vorzugsweise in dem Zusammenhang auch mit einem vergünstigten Tarif geladen werden soll.

Bei dem beschriebenen Verfahren zum Betreiben der Ladesäule 2 ist es auf besonders einfache Weise ohne großen Aufwand möglich, mehrere Elektrofahrzeuge 4, die auf unterschiedlichen Parkplätzen 1 geparkt sind, mit ein und derselben Ladesäule 2 aufzuladen. Ein wesentlicher Punkt dabei ist das besonders einfache Konzept, gemäß welchem die Reihenfolge beim Aufladen der einzelnen Elektrofahrzeuge 4 festgelegt werden kann.

Die einzelnen Anschlüsse 3 und die Ladesteuerung 5 können zudem als nachrüstbares Erweiterungsmodul zusammengefasst sein. So ist es beispielsweise möglich, Ladesäulen, welche bis dato noch nicht für den gleichzeitigen Anschluss von mehreren Elektrofahrzeugen 4 ausgebildet sind, durch Einbau des Erweiterungsmoduls auf einfache Weise zu erweitern, sodass die betreffenden Ladesäulen genauso wie im Zusammenhang mit der hier abgebildeten Ladesäule 2 betrieben werden können. Natürlich ist es auch möglich, dass die Anschlüsse 3 und die Ladesteuerung 5 von vornerein bei der Produktion der Ladesäule 2 vorgesehen werden.

## Patentansprüche

1. Verfahren zum Betreiben einer Ladesäule (2), bei welchem mehrere gleichzeitig an jeweiligen Anschlüssen (3) der Ladesäule (2) angeschlossene Elektrofahrzeuge (4) mittels einer Ladesteuerung (5) der Ladesäule (2) ausschließlich einzeln geladen werden,
**dadurch gekennzeichnet, dass**
die Ladesteuerung (5) ein an einem Anschluss (3), der als nachrangig zu bedienender Anschluss (3) ausgebildet und durch eine entsprechende Beschriftung und/oder eine entsprechende Farbgebung als nachrangig zu bedienender Anschluss (3) optisch hervorgehoben ist, angeschlossenes Elektrofahrzeug (4) mit niedrigerer Priorität als die an den übrigen Anschlüssen (3) angeschlossenen Elektrofahrzeuge (4) auflädt, wobei zunächst die anderen Elektrofahrzeuge (4), welche an den jeweiligen übrigen Anschlüssen (3) angeschlossen worden sind, zuerst und mit höherer Priorität aufgeladen werden und erst dann, wenn diese einen bestimmten Ladezustand erreicht haben oder vollständig aufgeladen worden sind, das Elektrofahrzeug (4) aufgeladen wird, welches an dem nachrangig zu bedienenden Anschluss (3) angeschlossen worden ist.

2. Verfahren nach Anspruch 1,
**dadurch gekennzeichnet, dass**
eine Reihenfolge, gemäß welcher die gleichzeitig angeschlossenen Elektrofahrzeuge (4) ausschließlich einzeln geladen werden, gemäß einer erfassten Vorgebe eines Betreibers der Ladesäule (2) erfolgt.

3. Verfahren nach Anspruch 2,
**dadurch gekennzeichnet, dass**
die Vorgabe des Betreibers der Ladesäule (2) mittels einer Benutzerschnittstelle der Ladesäule (2) erfasst oder mittels einer Kommunikationsschnittstelle der Ladesäule (2) empfangen wird.

4. Verfahren nach einem der vorhergehenden Ansprüche,
**dadurch gekennzeichnet, dass**
die Elektrofahrzeuge (4) gemäß einer Reihenfolge, wie sie an der Ladesäule (2) angeschlossen worden sind, nacheinander bis auf einen vorgegebenen Ladezustand aufgeladen werden.

5. Verfahren nach Anspruch 4,
**dadurch gekennzeichnet, dass**
für alle Elektrofahrzeuge (4) derselbe Wert für den Ladezustand vorgegeben wird.

6. Verfahren nach einem der Ansprüche 4 oder 5,
**dadurch gekennzeichnet, dass**
nachdem bei allen Elektrofahrzeugen (4) der vorgegebene Ladezustand erreicht worden ist, die Elektrofahrzeuge (4) nacheinander vollständig aufgeladen werden.

7. Verfahren nach einem der vorhergehenden Ansprüche,
**dadurch gekennzeichnet, dass**
nach dem Anschließen der jeweiligen Elektrofahrzeuge (4) überprüft wird, ob diese jeweils einen erhöhten Prioritätsstatus aufweisen, wobei diejenigen Elektrofahrzeuge (4) mit erhöhtem Prioritätsstatus zuerst geladen werden.

8. Ladesäule (2), umfassend mehrere Anschlüsse (3) zum gleichzeitigen Anschließen mehrerer Elektrofahrzeuge (4) und eine Ladesteuerung (5), welche dazu eingerichtet ist, die gleichzeitig an den jeweiligen Anschlüssen (3) angeschlossenen Elektrofahrzeuge (4) ausschließlich einzeln zu laden,
**dadurch gekennzeichnet, dass**
zumindest einer der Anschlüsse (3) als nachrangig zu bedienender Anschluss (3) ausgebildet und durch eine entsprechende Beschriftung und/oder eine entsprechende Farbgebung als nachrangig zu bedienender Anschluss (3) optisch hervorgehoben ist, wobei die Ladesteuerung (5) dazu eingerichtet ist, ein an diesem Anschluss (3) angeschlossenes Elektrofahrzeug (4) mit niedrigerer Priorität als die an den übrigen Anschlüssen (3) angeschlossenen Elektrofahrzeuge (4) aufzuladen und dabei zunächst die anderen Elektrofahrzeuge (4), welche an den jeweiligen übrigen Anschlüssen (3) angeschlossen worden sind, zuerst und mit höherer Priorität aufzuladen und erst dann, wenn diese einen bestimmten Ladezustand erreicht haben oder vollständig aufgeladen worden sind, das Elektrofahrzeug (4) aufzuladen, welches an dem nachrangig zu bedienenden Anschluss (3) angeschlossen worden ist.

9. Ladesäule (2) nach Anspruch 8
**dadurch gekennzeichnet, dass**
die Anschlüsse (3) und die Ladesteuerung (5) in einem nachrüstbaren Erweiterungsmodul zusammengefasst sind.

10. Ladesäule (2) nach einem der Ansprüche 8 oder 9,
**dadurch gekennzeichnet, dass**
die Ladesäule (2) eine Benutzerschnittstelle aufweist, an welcher ein Benutzer auswählen kann, dass sein Elektrofahrzeug (4) nachrangig und/oder mit einem vergünstigen Tarif geladen werden soll, wobei die Ladesteuerung (5) dazu eingerichtet ist, dieses Elektrofahrzeug (4) mit niedrigerer Priorität als die an den übrigen Anschlüssen (3) angeschlossenen Elektrofahrzeuge (4) aufzuladen.

## Claims

1. Method for operating a charging column (2), in which a plurality of electric vehicles (4) connected to respective terminals (3) of the charging column (2) are charged exclusively individually by means of a charging control system (5) of the charging column (2),
**characterised in that**
the charging control system (5) charges an electric vehicle (4) connected to a terminal (3), which is configured as a terminal (3) to be operated in a subordinate manner and is optically emphasised as a terminal (3) to be operated in a subordinate manner by an appropriate labelling and/or an appropriate colouration, with lower priority than the electric vehicles (4) connected to the remaining terminals (3), wherein first the other electric vehicles (4) which have been connected to the respective other terminals (3) are charged first and with higher priority and only when they have reached a specific charging state or have been completely charged is the electric vehicle (4) charged which has been connected to the terminal (3) to be operated in a subordinate manner.

2. Method according to claim 1,
**characterised in that**
a sequence according to which the simultaneously connected electric vehicles (4) are charged exclusively individually, is carried out according to a detected preset of an operator of the charging column (2).

3. Method according to claim 2,
**characterised in that**
the preset of the operator of the charging column (2) is detected by means of a user interface of the charging column (2) or is received by means of a communication interface of the charging column (2).

4. Method according to any of the preceding claims
**characterised in that**
the electric vehicles (4) are charged one after another until reaching a predetermined charging state according to a sequence according to which they have been connected to the charging column (2).

5. Method according to claim 4,
**characterised in that**
for all electric vehicles (4) the same value is predetermined for the charging state.

6. Method according to claim 4 or 5,
**characterised in that**
after the predetermined charging state has been achieved by all electric vehicles (4) the electric vehicles (4) are charged completely one after another.

7. Method according to any of the preceding claims
**characterised in that**
after respective electric vehicles (4) have been connected, it is ascertained whether they have in each case an elevated priority status, wherein those electric vehicles (4) having an elevated priority status are charged first.

8. Charging column (2) comprising a plurality of terminals (3) for the simultaneous connection of a plurality of electric vehicles (4) and a charging control system (5) which is configured to charge exclusively individually the electric vehicles (4) which have been connected simultaneously to the respective terminals (3),
**characterised in that**
at least one of the terminals (3) is configured as a terminal (3) to be operated in a subordinate manner and is optically emphasised as a terminal (3) to be operated in a subordinate manner by means of an appropriate labelling and/or an appropriate colouration, wherein the charging control system (5) is configured to charge an electric vehicle (4) connected to this terminal (3) with a lower priority than the electric vehicles (4) connected to the remaining terminals (3) and in this case first to charge first and with higher priority the remaining electric vehicles (4) which have been connected to the respective remaining terminals (3) and only when they have achieved a specific charging state or have been charged completely to charge the electric vehicle (4) which has been connected with the terminal (3) to be operated in a subordinate manner.

9. Charging column (2) according to claim 8
**characterised in that**
the terminals (3) and the charging control system (5) are combined in an extension module which can be retrofitted.

10. Charging column (2) according to any of claims 8 or 9,
**characterised in that**
the charging column (2) has a user interface at which a user can select that their electric vehicle (4) should be charged in a subordinate manner and/or at a discounted tariff, wherein the charging control system (5) is configured to charge this electric vehicle (4) with a lower priority than the electric vehicles (4) connected to the remaining terminals (3).

## Revendications

1. Procédé pour faire fonctionner une colonne de recharge (2), dans lequel plusieurs véhicules électriques (4) raccordés simultanément à des bornes (3) respectives de la colonne de recharge (2) sont chargés exclusivement individuellement au moyen d'une commande de recharge (5) de la colonne de recharge (2),
**caractérisé en ce que**
la commande de recharge (5) recharge un véhicule électrique (4) avec une priorité inférieure à celle des véhicules électriques (4) raccordés aux autres bornes (3), au niveau d'une borne (3), qui est formée en tant que borne (3) à utiliser de manière secondaire et est mise en évidence de manière optique par un marquage correspondant et/ou une couleur correspondante en tant que borne (3) à utiliser de manière secondaire,
dans lequel en premier lieu les autres véhicules électriques (4), lesquels ont été raccordés aux autres bornes (3) respectives, sont rechargés en premier et avec une priorité plus élevée et, seulement quand ceux-ci ont atteint un état de charge donné ou ont été rechargés entièrement, le véhicule électrique (4) est rechargé, lequel a été raccordé à la borne (3) à utiliser de manière secondaire.

2. Procédé selon la revendication 1,
**caractérisé en ce que**
un ordre, selon lequel les véhicules électriques (4) raccordés simultanément ont été chargés exclusivement individuellement, s'effectue selon une spécification enregistrée d'un opérateur de la colonne de recharge (2).

3. Procédé selon la revendication 2,
**caractérisé en ce que**
la spécification de l'opérateur de la colonne de recharge (2) est enregistrée au moyen d'une interface utilisateur de la colonne de recharge (2) ou est reçue au moyen d'une interface de communication de la colonne de recharge (2).

4. Procédé selon l'une quelconque des revendications précédentes,
**caractérisé en ce que**
les véhicules électriques (4) sont rechargés selon un ordre, tel qu'ils ont été raccordés à la colonne de recharge (2), les uns après les autres jusqu'à un état de charge prédéfini.

5. Procédé selon la revendication 4,
**caractérisé en ce que**,
pour tous les véhicules électriques (4), la même valeur est prédéfinie pour l'état de charge.

6. Procédé selon l'une quelconque des revendications 4 ou 5,
**caractérisé en ce que**,
après que pour tous les véhicules électriques (4) l'état de charge prédéfini a été atteint, les véhicules électriques (4) sont entièrement rechargés les uns après les autres.

7. Procédé selon l'une quelconque des revendications précédentes,
**caractérisé en ce que**,
après que le raccordement des véhicules électriques (4) respectifs a été vérifié, pour voir si ceux-ci présentent un statut de priorité élevé, dans lequel lesdits véhicules électriques (4) avec un statut de priorité élevé sont chargés en premier.

8. Colonne de recharge (2), comprenant plusieurs bornes (3) pour raccorder simultanément plusieurs véhicules électriques (4) et une commande de recharge (5), laquelle est agencée pour charger exclusivement individuellement les véhicules électriques (4) raccordés simultanément aux bornes (3) respectives,
**caractérisé en ce que**
au moins l'une des bornes (3) est formée en tant que borne (3) à utiliser de manière secondaire et est mise en évidence de manière optique par un marquage correspondant et/ou une couleur correspondante en tant que borne (3) à utiliser de manière secondaire, dans lequel la commande de recharge (5) est agencé pour recharger un véhicule électrique (4) raccordé à cette borne (3) avec une priorité inférieure à celle des véhicules électriques (4) raccordés aux autres bornes (3) et ainsi en premier lieu les autres véhicules électriques (4), lesquels ont été raccordés aux autres bornes (3) respectives, sont à recharger en premier et avec une priorité plus élevée et seulement quand ceux-ci ont atteint un état de charge donné ou ont été rechargés entièrement, le véhicule électrique (4) est à recharger, lequel a été raccordé à la borne (3) à utiliser de manière secondaire.

9. Colonne de recharge (2) selon la revendication 8
**caractérisée en ce que**
les bornes (3) et la commande de recharge (5) sont regroupées dans un module d'extension pouvant être monté ultérieurement.

10. Colonne de recharge (2) selon l'une quelconque des revendications 8 ou 9, **caractérisée en ce que**
la colonne de recharge (2) présente une interface utilisateur, au niveau de laquelle un utilisateur peut choisir si son véhicule électrique (4) doit être chargé de manière secondaire et/ou avec un tarif préférentiel, dans lequel la commande de recharge (5) est agencé pour recharger ce véhicule électrique (4) avec une priorité inférieure à celle des véhicules électriques (4) raccordés aux autres bornes (3).
